# EUROPEAN PATENT APPLICATION

(11) **EP 2 821 643 A1**
(43) Date of publication of application: **07.01.2015**
(21) Application number: 14168380.5
(22) Date of filing: 15.05.2014
(51) Int. Cl.: F03D 11/02, F16L 27/093, F03D 9/00

(54) **Swivel joint and wind turbine system including same**

(30) Priority: 31.05.2013 JP 2013114921
(71) Applicant: Hitachi Ltd., Tokyo 100-8280 (JP)
(72) Inventor: Mukai, Hiroshi, Tokyo, 100-8280 (JP); Kobata, Norihito, Tokyo, 100-8280 (JP)
(74) Representative: MERH-IP Matias Erny Reichl Hoffmann

(57) **Abstract**

A swivel joint (100) including a housing (2) in a cylindrical shape, and a rotor (1) rotatably inserted to fit to an inner portion of the housing (2), in which a ring-like oil chamber (4) is configured between an inner peripheral face of the housing (2) and an outer peripheral face of the rotor (1), the rotor (1) includes an in-rotor flow channel (6) communicating with the ring-like oil chamber (4) from an end face thereof, the housing (2) includes an in-housing flow channel (10) penetrated from the outer peripheral face of the housing (2) to the ring-like oil chamber (4) of the inner peripheral face, and an opening portion of the in-rotor flow channel (6) facing the ring-like oil chamber (4) is installed with a guide vane (3) projected into the ring-like oil chamber (4).

## Description

### Technical Field

The present invention relates to a swivel joint and a wind turbine system including the same, and more particularly to a swivel joint in which a rotor is rotatably supported in a housing, and which is preferable for guiding a fluid such as an operating oil from an in-rotor flow channel in the rotor to an in-housing flow channel via a ring-like oil chamber and a wind turbine system including the same.

### Background

There is known a swivel joint of a background art which is used for a construction machine described in, for example, Japanese Unexamined Utility Model Application Publication No. Hei4(1992)-3192. The swivel joint described in this patent literature is constructed by a flow channel structure having a sectional shape shown in Fig. 13.

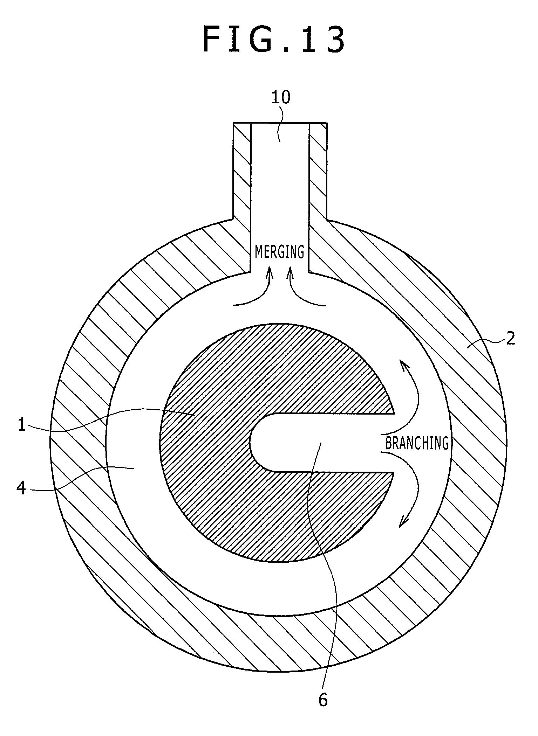

That is, as shown in Fig. 13, the swivel joint of the background art is configured by a number of constituent parts represented by a rotor 1 and a cylindrical housing 2, the rotor 1 is freely and rotatably supported in the housing 2 and carries out an operation of guiding a fluid such as an operating oil from an in-rotor flow channel 6 provided in the rotor 1 to an in-housing flow channel 10 via a ring-like oil chamber 4 configured in the housing 2, or guiding the fluid in an inverse direction, that, is, from the in-housing flow channel 10 to the in-rotor flow channel 6 via the ring-like oil chamber 4.

### Summary

As described above, the swivel joint of the background art transfers the fluid via the ring-like oil chamber 4, and therefore, there poses the following problem from a view point of a pressure loss. That is, a problem of increasing the pressure loss is posed, and the pressure loss significantly differs depending on a direction of an opening portion of the in-rotor flow channel 6.

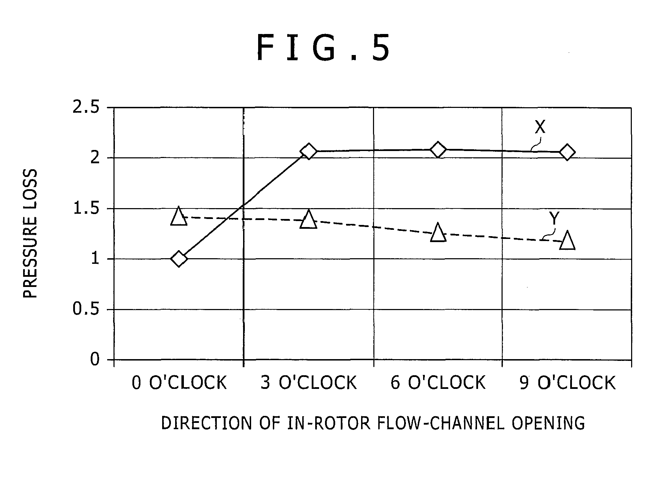

Here, in Fig. 13, the direction of the opening portion of the in-rotor flow channel 6 is defined as a 0 o'clock for an upper direction, 3 o'clock for a right direction, 6 o'clock for a lower direction, and 9 o'clock for a left direction for convenience of an explanation. Fig. 5 shows an evaluation result of the pressure loss by a numerical analysis in a case where the direction of the opening portion of the in-rotor flow channel 6 is defined. Linear lines X of Fig. 5 show a result of calculating the pressure loss in the case of defining the direction of the opening portion of the in-rotor flow channel 6 in the background art structure shown in Fig. 13.

In a case where the in-rotor flow channel 6 is directed in the 0 o'clock direction as shown in Fig. 5, the fluid which flows out from the in-rotor flow channel 6 substantially flows into the in-housing flow channel 10 directly. The pressure loss in this case becomes a minimum. Therefore, it is known that as a result of evaluating the pressure losses in directions of the opening portion of the in-rotor flow channel 6 of 3 o'clock, 6 o'clock, and 9 o'clock with that of 0 o'clock as a reference, the linear lines X indicating the pressure loss evaluation result of the background art structure are derived, and in other than 0 o'clock direction, the pressure loss is substantially doubled.

The reason is that in a case where the direction of the opening portion of the in-rotor flow channel 6 is other than the 0 o'clock direction, the fluid which flows out from the in-rotor flow channel 6 is bifurcated once in two directions, and flows into the in-housing flow channel 10, and therefore, a branching loss and a merging loss are added.

That is, in the case of the background art structure shown in Fig. 13, a flow which flows from the in-rotor flow channel 6 into the ring-like oil chamber 4 is bifurcated once in the ring-like oil chamber 4 and the bifurcated flows join together again at a stage of flowing out from the in-housing flow channel 10, and therefore, the pressure losses accompanied by branching and merging of the fluid are brought about. In the case of defining the upper direction of the opening portion of the in-rotor flow channel 6 as 0 o'clock, the right direction as 3 o'clock, the lower direction as 6 o'clock, and the left direction as 9 o'clock, whereas in the 0 o'clock direction, the branching loss and the merging loss are hardly brought about, the branching loss and the merging loss are brought about in the other directions, and therefore, there poses a problem of direction dependency in which the pressure loss is increased or reduced depending on the direction.

The present invention has been carried out in view of the point described above, and it is an object thereof to provide a swivel joint achieving a reduction in a pressure loss by alleviating a branching flow and a merging flow produced in a ring-like oil chamber, and capable of preventing a problem of increasing or reducing the pressure loss depending on a direction of an opening portion of an in-rotor flow channel and a wind turbine system including the same.

In order to achieve the object described above, a swivel joint of the present invention is featured in including a housing in a cylindrical shape, and a rotor inserted to fit rotatably to an inner portion of the housing, in which a ring-like oil chamber is configured between an inner peripheral face of the housing and an outer peripheral face of the rotor, the rotor includes an in-rotor flow channel communicating with the ring-like oil chamber from an end face thereof, the housing includes an in-housing flow channel penetrated from the outer peripheral face of the housing to the ring-like oil chamber of the inner peripheral face, and an opening portion of the in-rotor flow channel facing the ring-like oil chamber is installed with a guide vane projected into the ring-like oil chamber.

In order to achieve the object described above, a wind turbine system of the present invention is featured in including a windmill rotor configured by a hub and a blade, a hydraulic pump connected to the windmill rotor via a shaft connected to the hub for transmitting a rotational energy of the windmill rotor via the shaft to convert into a pressure energy of an operating oil, a nacelle containing at least the hydraulic pump and axially supporting the windmill rotor via the shaft, a tower supporting the nacelle at a top portion thereof, a side thereof opposed to the top portion being fixed to a foundation, a hydraulic motor installed above the foundation in the tower, a hydraulic pipe for supplying an operating oil from the hydraulic pump to the hydraulic motor to circulate, a generator driven by converting the pressure energy of the hydraulic fluid into a rotational energy by the hydraulic motor supplied with the hydraulic fluid from the hydraulic pump, and/or a swivel joint installed between the nacelle and the tower and configured with at least two routes of hydraulic circuits for circulating the hydraulic fluid between the hydraulic motor and the hydraulic pump, the respective hydraulic circuits being connected with the hydraulic pipe, in which the swivel joint is the swivel joint having a configuration described above.

According to the present invention, there is an effect of achieving a reduction in a pressure loss by alleviating a branching flow and a merging brought about in the ring-like oil chamber and capable of preventing the problem of increasing or reducing the pressure loss by the direction of the opening portion of the in-rotor flow channel.

### Brief Description of the Drawings

Fig. 1 is a vertical sectional view showing a first embodiment of a swivel joint of the present invention.
Fig. 2 is a horizontal sectional view showing the first embodiment of the swivel joint of the present invention.
Fig. 3 is a perspective view showing a rotor and a housing configuring the first embodiment of the swivel joint of the present invention.
Fig. 4 is a perspective view showing an example of a guide vane adopted in the first embodiment of the swivel joint of the present invention.
Fig. 5 is a characteristic diagram showing an evaluation result of a pressure loss by a numerical analysis in a case of defining a direction of an opening portion of an in-rotor flow channel in the first embodiment of the swivel joint of the present invention in comparison with an evaluation result of a background art structure.
Fig. 6 is a sectional view showing an example of a way of assembling the guide vane in the first embodiment of the swivel joint of the present invention.
Fig. 7 is a partially broken view of a wind turbine system according to a second embodiment of the present invention.
Fig. 8 is a vertical sectional view showing a swivel joint adopted in the wind turbine system according to the second embodiment of the present invention.
Fig. 9 is a sectional view taken along a line A-A of Fig. 8.
Fig. 10 is a sectional view taken along a line B-B of Fig. 8.
Fig. 11 is a vertical sectional view showing, a third embodiment of a swivel joint of the present invention.
Fig. 12 is a characteristic diagram showing an evaluation result of a pressure loss by a numerical analysis in a case of defining a direction of an opening portion of an in-rotor flow channel according to a third embodiment of a swivel joint of the present invention in comparison with the evaluation results of the first embodiment and the background art structure.
Fig. 13 is a horizontal direction sectional view showing a swivel joint of the background art structure.

### Detailed Description

An explanation will be given of a swivel joint of the present invention and a wind turbine system including the same based on illustrated embodiments. Incidentally, in the respective embodiments, the same notation is used for the constituent same part.

### First Embodiment

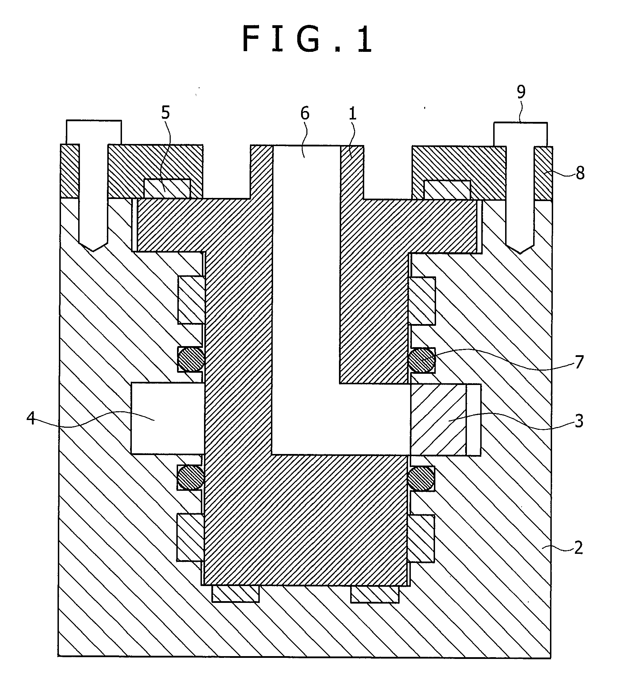

Figs. 1 through 3 show the first embodiment of the swivel joint of the present invention.

As shown in Fig. 1 through Fig. 3, the swivel joint of the present embodiment is substantially configured by the cylindrical housing 2, and the rotor 1 rotatably inserted to fit to an inner portion of the housing 2, the ring-like oil chamber 4 is configured between an inner peripheral face of the housing 2 and an outer peripheral face of the rotor 1, the rotor 1 includes the in-rotor flow channel 6 communicating with the ring-like oil chamber 4 from an end face thereof, and the housing 2 includes the in-housing flow channel 10 penetrated from an outer peripheral face of the housing 2 to the ring-like oil chamber 4 at an inner peripheral face thereof. According to the present embodiment, a guide vane 3 projected into the ring-like oil chamber 4 is installed at an opening portion of the in-rotor flow channel 6 facing the ring-like oil chamber 4. The guide vane 3 is fixed to a wall face of the opening portion of the in-rotor flow channel 6 facing the ring-like oil chamber 4 by a fastening means described later. Incidentally, in Fig. 1, numeral 5 designates a bearing supporting the rotor 1, numeral 7 designates a seal member for sealing an interval between the rotor 1 and the housing 2, numeral 8 designates a lid, and numeral 9 designates a setscrew for fixing the lid 8 to the housing 2.

The in-housing flow channel 10 described above is inclined in a direction of a flow of an operating oil swirling in the ring-like oil chamber 4 relative to a radius direction of the housing 2. The guide vane 3 is configured to incline to rectify a flow of an operating oil flowing from the in-rotor flow channel 6 into the ring-like oil chamber 4 to a flow swirling in one direction, and is configured in a shape of a curved face curved in the flow direction of the hydraulic fluid flowing in the ring-like oil chamber 4.

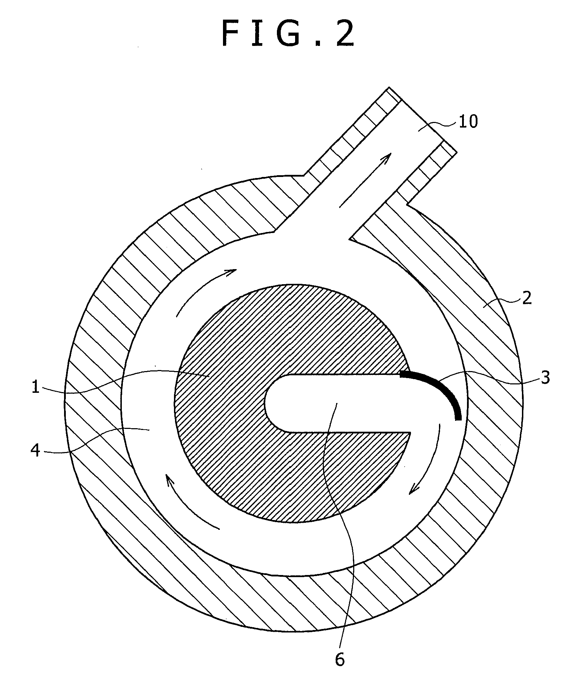

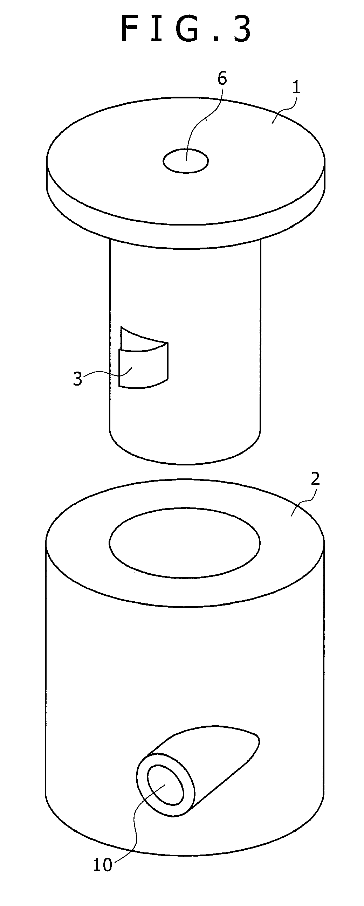

Describing further in details, as shown in Fig. 1 and Fig. 3, the rotor 1 is supported by the bearing 5 freely and rotatably at an inner portion of the housing 2. An inner portion of the rotor 1 is configured by a flow channel in an L-like shape for passing the fluid, an opening portion on one side faces the ring-like oil chamber 4, and the opening portion is provided with the guide vane 3 in a configuration of being projected into the ring-like oil chamber 4. On the other hand, in the housing 2, as shown in Fig. 2 and Fig. 3, the in-housing flow channel 10 directed from the ring-like oil chamber 4 to outside is present, and the in-housing flow channel 10 is configured to be inclined to a direction of a swirl flow induced by the guide vane 3 relative to a radius direction of the housing 2.

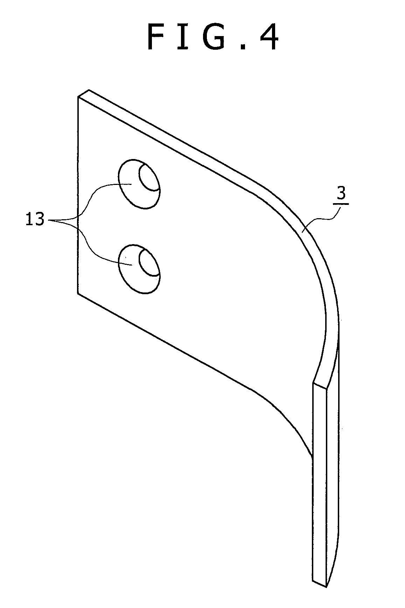

Fig. 4 shows an example of a structure of the guide vane 3 adopted in the present embodiment. As shown in the drawing, the guide vane 3 of the present embodiment is provided with plural bolt holes 13 for fixing to a wall face of the opening portion of the in-rotor flow channel 6 facing the ring-like oil chamber 4, and a side of the guide vane 3 opposed to the side of providing the bolt holes 13 is configured in the shape of the curved face curved in the flow direction of the hydraulic fluid flowing in the ring-like oil chamber 4.

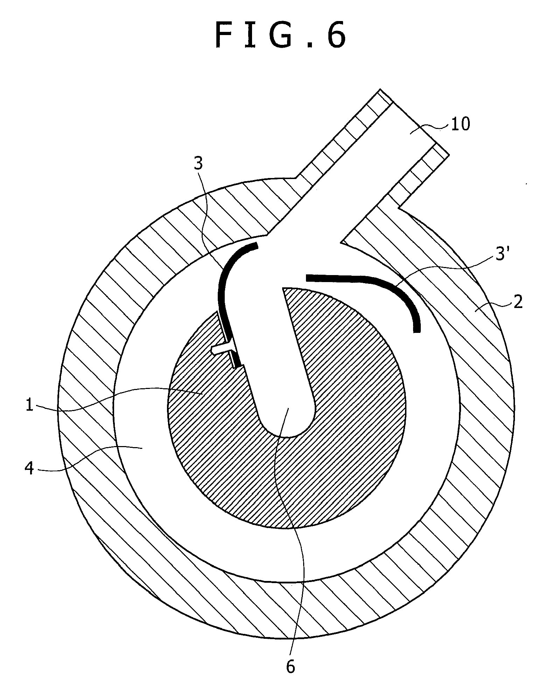

Fig. 6 shows am example of a way of assembling the guide vane 3 of the present embodiment. As shown in the drawing, the guide vane 3 of the present embodiment is constructed by a structure of being projected to the ring-like oil chamber. Therefore, as an order of assembling the guide vane 3, first, the guide vane 3' is tacked in the ring-like oil chamber 4 of the housing 2 in a state of removing the guide vane 3', and the rotor 1 is inserted into the housing 2 under the state. Thereafter, the guide vane 3 is fastened to the rotor 1 by a bolt or a fastening means of welding, adhering or the like.

A pressure loss is reduced by reducing a branching loss and a merging loss by configuring the guide vane 3 in the ring-like oil chamber 4 and a direction dependency of the pressure loss by the direction of the opening portion of the in-rotor flow channel 6 can be alleviated as in the present embodiment.

Broken lines of Y of Fig. 5 showing an evaluation result of a pressure loss by a numerical analysis in a case of defining the direction of the opening portion of the in-rotor flow channel 6 show the evaluation result of the pressure loss by the numerical analysis in a case of defining the direction of the opening portion of the in-rotor flow channel 6 in the configuration of the present embodiment.

As shown in the diagram, in the linear lines X which are the evaluation result of the pressure loss of the background art structure, about a double pressure loss is brought about in other than the 0 o'clock direction, and it is known that a strong direction dependency is present. In contrast thereto, in the broken lines Y which are the evaluation result of the pressure loss of the present embodiment, the pressure loss is reduced by a multiplication factor of 1.5 or less in all directions, and it is understood that the direction dependency of the pressure loss by the direction of the opening portion of the in-rotor flow channel 6 is alleviated.

### Second Embodiment

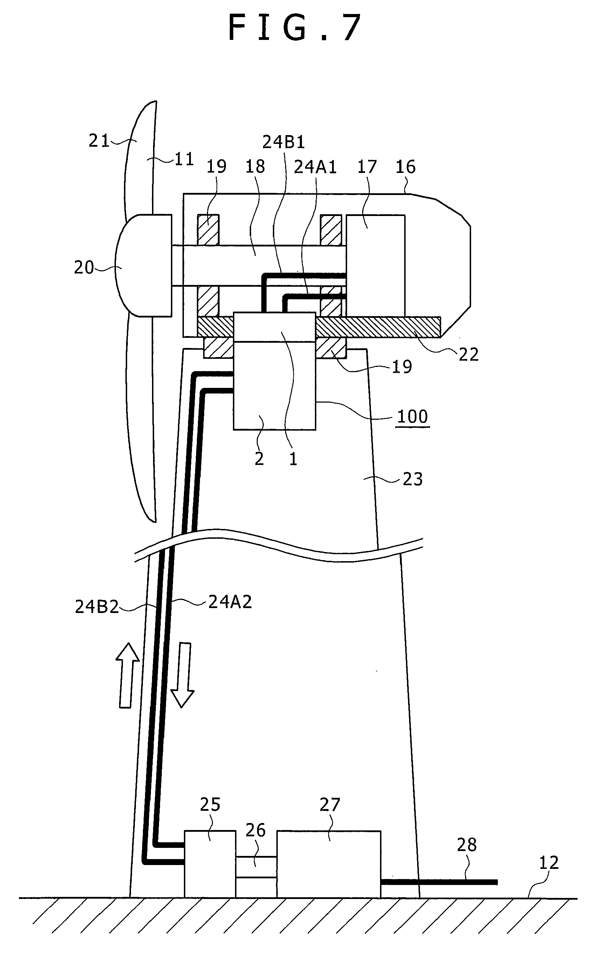

Next, an explanation will be given of a wind turbine system according to a second embodiment of the present invention in reference to Fig. 7 through Fig. 10.

As shown in the drawings, the wind turbine system of the present embodiment is substantially configured by a windmill rotor 11 configured by a hub 20 and a blade 21, a hydraulic pump 17 connected to the hub 20 of the windmill rotor 11, connected to the windmill rotor 11 via a shaft 18 supported by a bearing 19, transmitting a rotational energy of the windmill rotor 11 via the shaft 18 to convert into a pressure energy of a hydraulic oil, and installed on a base 22, a nacelle 16 containing at least the hydraulic pump 17 for axially supporting the windmill rotor 11 via the shaft 18, a tower 23 supporting the nacelle 16 at a top portion thereof, a side thereof opposed to the top portion being fixed to a foundation 12, a hydraulic motor 25 installed above the foundation 12 in the tower 23, first hydraulic pipes 24A1 and 24B1 and second hydraulic pipes 24A2 and 24B2 for supplying to circulate the hydraulic fluid from the hydraulic pump 17 to the hydraulic motor 25, a generator 27 driven by the hydraulic motor 25 via a generator shaft 26 by converting the rotational energy of the windmill rotor 11 into the rotational energy by the hydraulic motor 15 supplied with the hydraulic fluid from the hydraulic pump 17 installed above the foundation 12, and a swivel joint 100 installed between the nacelle 16 and the tower 23, configured with at least two routes of hydraulic circuits for circulating the hydraulic fluid between the hydraulic motor 25 and the hydraulic pump 17, the respective hydraulic circuits being connected with the first hydraulic pipes 24A1 and 24B1 and the second hydraulic pipes 24A2 and 24B2. Incidentally, numeral 28 designates a power transmission line for supplying a power generated by the generator 27 to an electric power system.

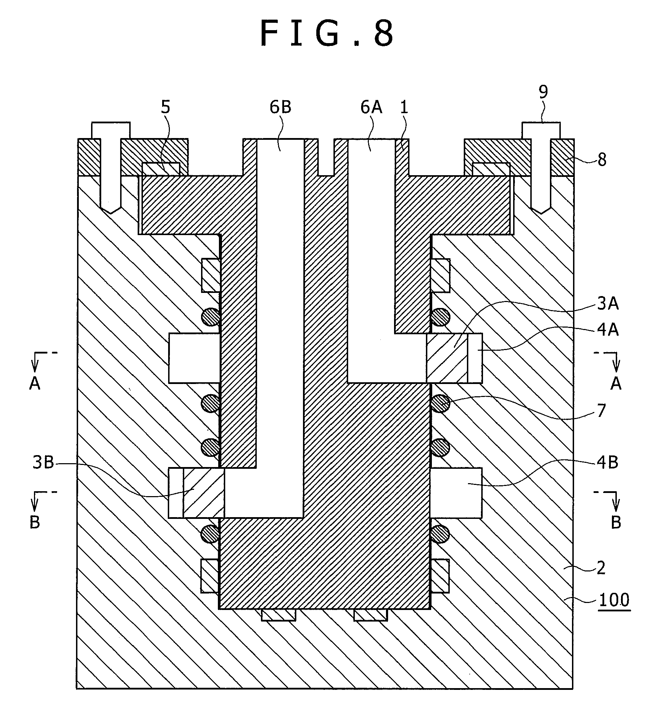

The present embodiment adopts a swivel joint having a configuration shown in Fig. 8 through Fig. 9 as the swivel joint 100.

That is, as shown in Fig. 8 through Fig. 9, the swivel joint 100 of the present embodiment includes the cylindrical housing 2 and the rotor 1 rotatably inserted to fit to the inner portion of the housing 2, two of ring-like oil chambers 4A and 4B independent from each other are configured between the inner peripheral face of the housing 2 and the outer peripheral face of the rotor 1, the rotor 1 includes two routes of in-rotor flow channels 6A and 6B communicating with the respective ring-like oil chambers 4A and 4B from end faces thereof, the housing 2 includes two routes of in-housing flow channels 10A and 10B penetrated from the outer peripheral face of the housing 2 to respective ring-like oil chambers 4A and 4B of the inner peripheral face of the housing 2, guide vanes 3A and 3B projected into the respective ring-like oil chambers 4A and 4B are installed at respective opening portions of two routes of the in-rotor flow channels 6A and 6B facing the respective ring-like oil chambers 4A and 4B, the housing 2 is fixed to the tower 23, and the rotor 1 is supported by the nacelle 16 rotatably along with the nacelle 16.

The hydraulic fluid from the hydraulic pump 17 is supplied to the in-rotor flow channels 6A and 6B via the first hydraulic pipes 24A1 and 24B1, and the hydraulic fluid guided from the in-rotor flow channels 6A and 6B to the in-housing flow channels 10A and 10B via the ring-like oil chambers 4A and 4B is supplied to the hydraulic motor 25 via the second hydraulic pipes 24A2 and 24B2.

Describing further in details, although a general wind turbine system includes a gearbox, a generator, a power converter and the like in the nacelle 16, a wind power generation-system of the present embodiment is constructed by a structure in which the generator 27 is installed above the foundation 12 on the ground, power is transmitted between the hydraulic pump 17 in the nacelle 16 and the hydraulic motor 25 on the ground by a hydraulic pressure with an object of weight reduction.

That is, the rotational energy of the windmill rotor 11 driven by a wind power is transmitted to the hydraulic pump 17 via the shaft 18 and converted into the pressure energy of the hydraulic fluid. The hydraulic fluid is transmitted to the hydraulic motor 25 via the first hydraulic pipes 24A1 and 24B1 and the second hydraulic pipes 24A2 and 24B2, and converted into the rotational energy again to thereby drive the generator 27.

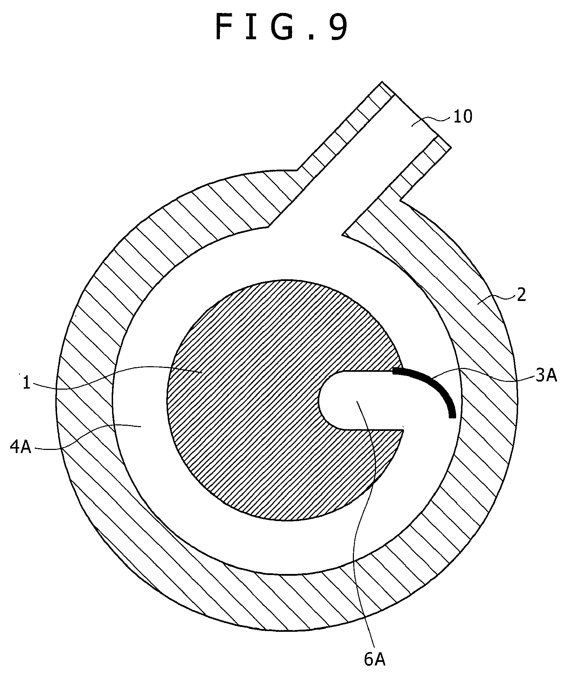

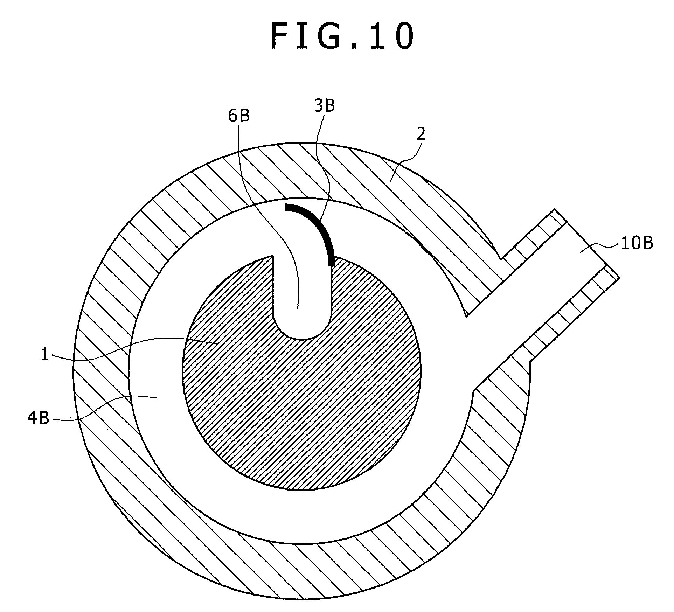

Ordinarily, a direction of the nacelle 16 is controlled such that the blade 21 is opposed to a wind direction, and therefore, it is necessary to make the nacelle 16 pivotable in an arbitrary direction. Therefore, the swivel joint 100 is installed between the nacelle 16 and the tower 23, the rotor 1 is made to be rotated along with the nacelle 16, and the housing 2 is fixed to the tower 23. It is necessary to circulate the hydraulic fluid between the hydraulic pump 17 and the hydraulic motor 25, and therefore, the swivel joint 100 of the present embodiment needs at least two routes of hydraulic circuits as shown in Fig. 8. That is, these are two routes of hydraulic circuits configured by the in-rotor flow channels 6A and 6B and the ring-like oil chambers 4A and 4B shown in Fig. 8 and the in-housing flow channels 10A and 10B shown in Fig. 9 and Fig. 10.

According to the present embodiment, there is generated a torque in proportion to a flow rate in a direction opposed to a direction of inclining the guide vane without depending on a direction of a flow of a fluid. That is, although in a case of the configuration of Fig. 2, a torque in an anticlockwise direction is generated at the rotor 1, as shown in Fig. 9 and Fig. 10, torques caused by fluid forces generated at the rotor 1 can be canceled by configuring inclination directions of the guide vanes 3A and 3B in the two routes of hydraulic circuits by directions inverse to each other.

The pressure loss can be reduced by reducing the branching loss and the merging loss, and the direction dependency of the pressure loss by the direction of the opening portion of the in-rotor flow channel can be alleviated by constructing such a configuration of the present embodiment.

### Third Embodiment

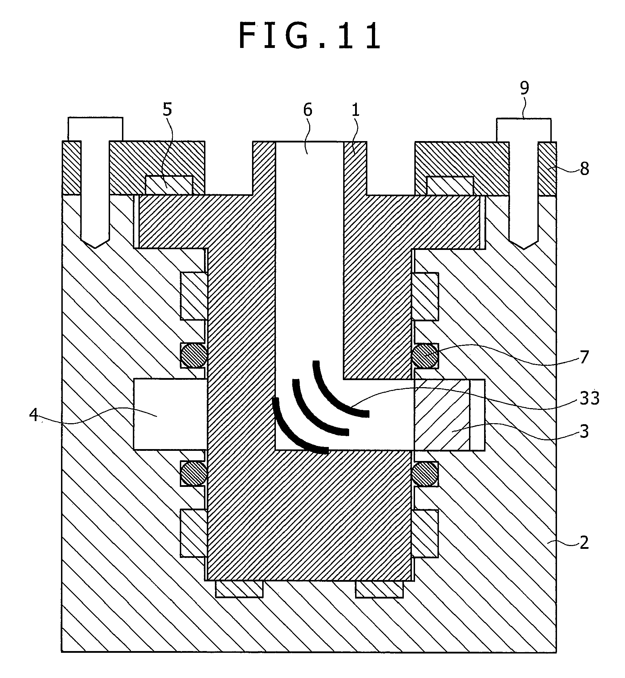

Fig. 11 shows a third embodiment of a swivel joint according to the present invention. The present embodiment shown in the drawing installs a corner vane 33 at a bent portion of the in-rotor flow channel 6 configured by a section in an L-like shape in the configuration of the first embodiment shown in Fig. 1 to thereby achieve a further reduction in the pressure loss.

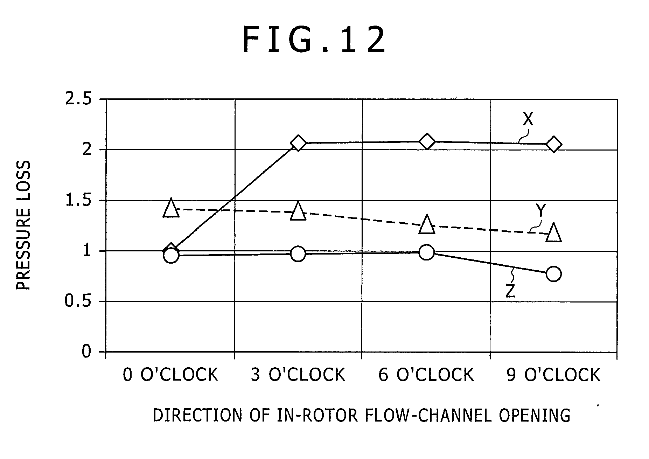

Fig. 12 shows a result of evaluating a pressure loss by a numerical analysis in a case of defining the direction of the opening portion of the in-rotor flow channel 6, and a result of evaluating a pressure loss in a case of adding the corner vane 33 of the present embodiment. As is apparent from the diagram, it is known that an effect of improving the pressure loss is achieved in all the directions by a flow rectifying effect of the corner vane 33 of the present embodiment and also the direction dependency of the rotor 1 is reduced.

Incidentally, the present invention is not limited to the embodiments described above but includes various modified examples. For example, the embodiments described above are explained in details in order to explain to easy to understand the present invention, and the present invention is not necessarily limited to a configuration provided with all of the configurations explained. A portion of a configuration of a certain embodiment can be substituted for a configuration of other embodiment, and a configuration of other embodiment can also be added to a configuration of a certain embodiment. Also, a portion of a configuration of each embodiment can be subjected to addition, deletion, and substitution of other configuration.

## Claims

1. A swivel joint (100) comprising:
a housing (2) in a cylindrical shape; and
a rotor (1) inserted to fit rotatably to an inner portion of the housing (2),
wherein a ring-like oil chamber (4) is configured between an inner peripheral face of the housing (2) and an outer peripheral face of the rotor (1),
wherein the rotor includes an in-rotor flow channel (6) communicating with the ring-like oil chamber (4) from an end face thereof, the housing (2) includes an in-housing flow channel (10) penetrated from an outer peripheral face of the housing (2) to the ring-like oil chamber (4) of the inner peripheral face, and an opening portion of the in-rotor flow channel (6) facing the ring-like oil chamber (4) is installed with a guide vane (3) projected into the ring-like oil chamber (4).

2. The swivel joint according to claim 1,
wherein two of the ring-like oil chambers (4A, 4B) respectively independent from each other are configured between the inner peripheral face of the housing (2) and the outer peripheral face of the rotor (1);
wherein the in-rotor flow channel (6) is configured by two routes of the in-rotor flow channels (6A, 6B) communicating from the end faces of the rotor (1) to the respective ring-like oil chambers (4A, 4B);
wherein the in-housing flow channel (10) is configured by two routes of in-housing flow channels (10A, 10B) penetrated from the outer peripheral face of the housing (2) to the respective ring-like oil chambers (4A, 4B) of the inner peripheral face; and
wherein the respective opening portions of the two routes of the in-rotor flow channels (6A, 6B) facing the respective ring-like oil chambers (4A, 4B) are installed with the guide vanes (3A, 3B) projected into the respective ring-like oil chambers (4A, 4B).

3. The swivel joint according to claim 1 or 2, wherein the in-housing flow channel(s) (10, 10A, 10B) is (are) inclined to a direction of a flow of an operating oil swirled in the ring-like oil chamber(s) (4, 4A, 4B) relative to a radius direction of the housing.

4. The swivel joint according to any one of claims 1 through 3, wherein the guide vane (s) (3, 3A, 3B) is (are) configured to incline to rectify a flow of the hydraulic fluid flowing into the ring-like oil chamber (s) (4, 4A, 4B) from the in-rotor flow to a flow swirled in one direction.

5. The swivel joint according to claim 4, wherein inclination directions of the guide vanes (3A, 3B) installed at the respective opening portions of the two routes of in-rotor flow channels (6A, 6B) facing the respective ring-like oil chambers (4A, 4B) are inverse to each other.

6. The swivel joint according to claim 4 or 5, wherein the guide vane (s) is (are) configured in a shape of a curved face bent in the direction of the flow of the hydraulic fluid flowing in the ring-like oil chamber(s) (4, 4A, 4B).

7. The swivel joint according to any one of claims 1 through 6, **characterized in that** the guide vane(s) (3, 3A, 3B) is (are) fixed to a wall face (s) of the in-rotor flow channel (s) (6, 6A, 6B) of the opening portion (s) facing the ring-like oil chamber (s) (4, 4A, 4B) by a fastening means.

8. The swivel joint according to any one of claims 1 through 7, wherein the in-rotor flow channel (s) (6, 6A, 6B) is (are) configured by a section in an L-like shape, and a corner vane(s) is (are) installed at a bent portion thereof.

9. A wind turbine system comprising:
a windmill rotor (11) configured by a hub (20) and a blade (21);
a hydraulic pump (17) connected to the windmill rotor (11) via a shaft (18) connected to the hub (20) for transmitting a rotational energy of the windmill rotor (11) via the shaft (18) to convert into a pressure energy of an operating oil;
a nacelle (16) containing at least the hydraulic pump (11) and axially supporting the windmill rotor (1) via the shaft (18);
a tower (23) supporting the nacelle (16) at a top portion thereof, a side thereof opposed to the top portion being fixed to a foundation (12);
a hydraulic motor (25) installed above the foundation (12) in the tower (23);
hydraulic pipes (24A1, 24B1, 24A2, 24B2) supplying an operating oil from the hydraulic pump (17) to the hydraulic motor (25) to circulate;
a generator (27) driven by converting the pressure energy into the rotational energy by the hydraulic motor (25) supplied with the hydraulic fluid from the hydraulic pump (17); and
a swivel joint (100) installed between the nacelle (16) and the tower (23) and configured with at least two routes of hydraulic circuits for circulating the hydraulic fluid between the hydraulic motor (25) and the hydraulic pump (17), the respective hydraulic circuits being connected with the hydraulic pipes (24A1, 24B1, 24A2, 24B2);
wherein the swivel joint (100) is the swivel joint (100) according to any one of claims 2 through 8.

10. The wind turbine system according to claim 9, wherein the hydraulic fluid from the hydraulic pump (17) is supplied to the in-rotor flow channel (6) of the swivel joint (100) via the first hydraulic pipes (24A1, 24B1), and the hydraulic fluid guided from the in-rotor flow channel (6) to the in-housing flow channel (4) of the swivel joint (100) via the ring-like oil chamber (10) is supplied to the hydraulic motor (25) via the second hydraulic pipes (24A2, 24B2).

11. The wind turbine system according to claim 9 or 10, wherein the housing (2) of the swivel joint (100) is fixed to the tower (23), and the rotor (1) of the swivel joint (100) is supported by the nacelle (16) rotatably along with the nacelle (16).
